# EUROPEAN PATENT SPECIFICATION

(11) **EP 3 076 034 B1**
(45) Date of publication and mention of the grant of the patent: **27.02.2019**
(21) Application number: 16162725.2
(22) Date of filing: 30.03.2016
(51) Int. Cl.: F16C 13/00

(54) **TRACK ROLLER BEARING**
LAUFROLLENLAGER
ROULEMENT À ROULEAUX DE PISTE

(30) Priority: 31.03.2015 JP 2015071041
(43) Date of publication of application: 05.10.2016
(73) Proprietor: Minebea Co. Ltd., Kitasaku-gun, Nagano 389-0293 (JP)
(72) Inventor: SHOJI, Akira, Nagano, 389-0293 (JP); MURAKAMI, Tatsuhiko, Nagano, 389-0293 (JP)
(74) Representative: Liesegang, Eva

(56) References cited:
- EP-A2- 2 840 272

## Description

### Field of the Invention

The present invention relates to track roller bearings whose inner ring and outer ring are combined in a slidably rotatable manner via a resin liner and, in particular, to a track roller bearing suitable for use under high load condition. A track roller bearing according to the preamble of claim 1 is known from EP 2840 272 A2.

### Description of the Related Art

In an airplane wing, track roller bearings are applied to slats provided in a leading edge portion of the wing and to flaps provided in a trailing edge portion of the wing in such a way that the slats and flaps are extendable and retractable in the front-rear direction (see the patent document 1 mentioned below). This patent document 1 discloses a track roller bearing of such a configuration that the inner ring (inside ring) rotatably supports the outer ring (outside ring) while a self-lubricating resin liner is provided between the inner ring and the outer ring. In the track roller bearing described in the patent document 1, the outer ring contacts the track and rotates to move the track roller bearing along the track. Therefore, the slat and flap are supported by the track roller bearing in a state that the slat and flap are capable of extending and retracting. Because the slat and flap are devices to increase or decrease the lift of the wing, the track roller bearing is subjected to a significantly high load.

Patent Document 1: Japanese Patent Application Laid-open No. 2009-137574.

### SUMMARY OF THE INVENTION

### <Problem to be Solved by the Invention>

In such a track roller bearing as disclosed in the patent document 1, a sliding surface of the liner may be abraded away, and abrasion powder produced by the abrasion may adhere to the sliding surface. If the abrasion powder from the liner adheres to the sliding surface, the rotational torque for rotating the outer ring increases due to the increase of the outer diameter of the sliding surface resulting in a high rotational resistance of the outer ring. Once this problem happens, the outer ring can no longer rotate smoothly and the outer ring slips instead of rotating. In addition, slips may occur when the outer ring is pressed against the track under high load and is abraded away. Considering that a significantly high load is applied to the track roller bearing used in the aforementioned slat or flap, the problem mentioned above is likely to occur. However, it is necessary to prevent the slips from occurring for safety reasons. Therefore, more effective measures for slip prevention are being required.

The present invention is made in view of the above problem, and a primary object thereof is to provide a track roller bearing capable of maintaining its smooth rotation for a long period of time to thereby effectively reduce slips.

### <Means for Solving the Problem>

A track roller bearing related to an aspect of the present invention includes the features of claim 1.

In the track roller bearing of the present invention, when the inner ring and the outer ring rotate relative to each other, the liner sliding surface slides on the opposite surface. According to the present invention, by forming the non-contact portion in which the liner sliding surface does not contact the opposite surface,
within the area where the resin liner is formed, the resin liner has a smaller sliding area against the opposite surface on the other side than in the case of not forming the non-contact portion. On the other hand, any abrasion powder produced by abrading away the resin liner is brought into the non-contact portion to suppress the abrasion powder from adhering to the liner sliding surface. Therefore, an increase of the rotary torque for the track roller bearing is suppressed. Further, because there is an increase in the contact surface pressure of the resin liner, the friction coefficient of the resin liner decreases and the rotational resistance of the outer ring is reduced. From these factors, it is realizable for the outer ring to rotate smoothly for a long period. As a result, slips of the outer ring are reduced.

The non-contact portion of the present invention may be configured in different shape. The non-contact portion can be a groove extending in at least one of a circumferential direction of the liner sliding surface (a circumferential direction of the inner and outer rings), an axial direction of the liner sliding surface (an axial direction of the inner and outer rings), and an direction oblique to the axial direction. Further, the non-contact portion may be a plurality of recesses formed dispersedly. Further, the present invention includes such an aspect that a surface, on which the resin liner is formed, is covered with the resin liner in the non-contact portion, the surface being the outer circumferential surface of the inner ring and/or the inner circumferential surface of the outer ring. Furthermore, the present invention also includes such an aspect that a surface on which the resin liner is formed, is not covered
with the resin liner in the non-contact portion, the surface being the outer circumferential surface of the inner ring and/or the inner circumferential surface of the outer ring, and a surface which defines a bottom of the non-contact portion includes a plane in continuity with an interface between the resin liner and the surface on which the resin liner is formed, or a plane farther from the surface of the resin liner than the interface.

Further, the present invention also includes such an aspect that the non-contact portion is provided symmetrically with respect to a plan orthogonal to an axial direction of the inner ring and the outer ring. In some configurations of the non-contact portion, a component force acting on the outer ring in the axial direction may be brought about when the inner ring and the outer ring rotate relative to each other. For example, if the non-contact portion is a single groove extending in an oblique direction to intersect the axial direction, then such component force is brought about. However, according to the invention, if a plurality of grooves are formed symmetrically with respect to the plane orthogonal to the axial direction, then the component forces brought about in the axial direction cancel out. Hence, obstruction of the rotation of the track roller bearing due to deviation, in the axial direction, of the outer ring is suppressed.

### <Effect of the Present Invention>

According to the present invention, it is possible to provide a track roller bearing which maintains its smooth rotation for a long period of time to thereby effectively reduce slips.

### BRIEF DESCRIPTION OF THE DRAWINGS

Fig. 1A is an overall vertical cross-sectional view of a track according to a reference example;
Fig. 1B is an enlarged cross-sectional view depicting a liner of the track roller bearing according to a reference example;
Fig. 2 is an exploded perspective view of the track roller bearing;
Figs. 3A and 3B depicts non-contact portions of the resin liner as grooves extending in a circumferential direction, wherein Fig. 3A is a lateral view of an inner ring of the track roller bearing while Fig. 3B is a perspective view of the inner ring of the track roller bearing, according to a reference example;
Figs. 4A and 4B depicts non-contact portions of the resin liner as grooves extending in an axial direction, wherein Fig. 4A is a lateral view of an inner ring of the track roller bearing while Fig. 4B is a perspective view of the inner ring of the track roller bearing, according to the invention;
Figs. 5A, 5B and 5C are cross-sectional views depicting configurations of the depth of the grooves each of which is the non-contact portion (that is, views depicting cross-sectional shapes of the parts having the grooves), according to the invention;
Figs. 6A and 6B are lateral views of inner rings, depicting non-contact portions related to other embodiments according to the invention;
Fig. 7A is an overall vertical cross-sectional view depicting a track roller bearing related to still another embodiment wherein the resin liner formed with the non-contact portions is provided on the outer ring side, according to the invention;
Fig. 7B is an enlarged cross-sectional view depicting the resin liner of the track roller bearing related to the still other embodiment, according to the invention; and
Fig. 8 is a schematic view of an endurance test carried out for working examples.

### EMBODIMENTS FOR CARRYING OUT THE INVENTION

Referring to the accompanying drawings, explanations will be made below on embodiments in which the present invention is applied to a track roller bearing.

### [1] An overall configuration

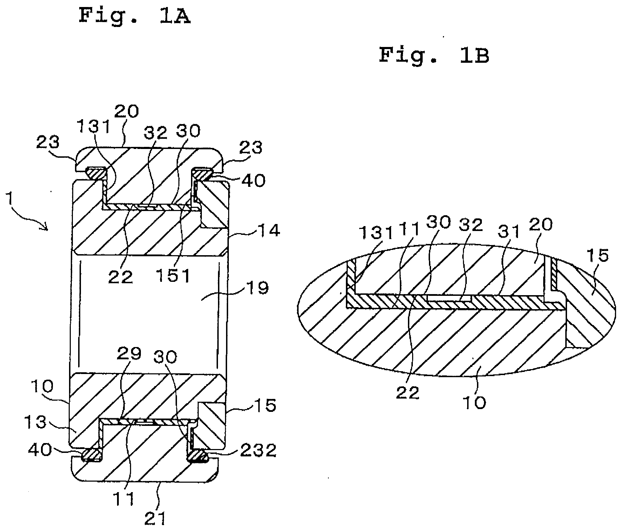

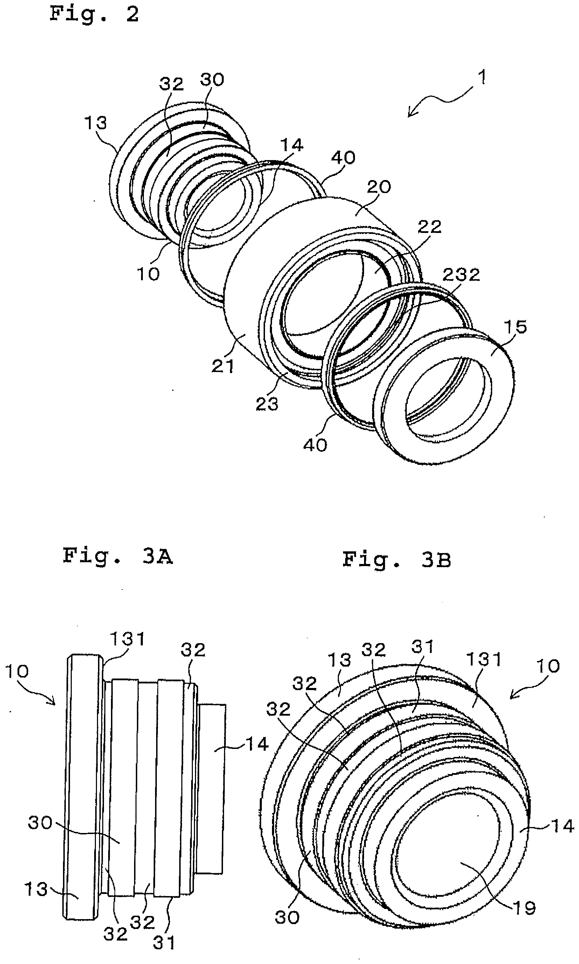

Fig. 1A is a vertical cross-sectional view of a track roller bearing 1 related to one embodiment. Fig. 2 is an exploded perspective view of the track roller bearing 1. The track roller bearing 1 includes a circular inner ring 10 and a circular outer ring 20 made of a metal such as stainless steel or the like. The
inner ring 10 and the outer ring 20 are assembled in such a manner as concentric and rotatable relative to each other. A fixed shaft, which is not depicted, is inserted through a through hole 19 of the inner ring 10 and the inner ring 10 is fixed on the fixed shaft. That is, the inner ring 10 is on the fixed side while the outer ring 20 is used in such a state as assembled to be rotatable relative to the inner ring 10. Note that, in the following explanations, the axial direction refers to the axial directions of the inner ring 10 and the outer ring 20 while the circumferential direction refers to the circumferential directions of the inner ring 10 and the outer ring 20.

The track roller bearing 1 according to the embodiment is mounted, for example, on a movable member which is supported to be movable in front-back direction, in a manner that the axial direction of the track roller bearing 1 is orthogonal to the movement in front or back direction of the movable member, and the track roller bearing 1 is used in a state that the outer circumferential surface 21 of the outer ring 20 is in contact with a track having a guide rail shape. In this state, the outer ring 20 of the track roller bearing 1 rotates to follow the movement of the movable member while being subjected to the load from the movable member. By this rotation, the track roller bearing 1 guides the movement of the movable member. Examples of the movable member can be the aforementioned slat or flap provided in an airplane wing.

On one end of the inner ring 10 in the axial direction (left end of the inner ring 10 in Fig. 1A), a flange portion 13 is formed to project outwardly in a radial direction. Further, on the other end of the inner ring 10 in the axial direction (right end of the inner ring 10 in Fig. 1A), a small diameter portion 14 is formed. A washer 15 is fitted and fixed to the small diameter portion 14. The outer ring 20 is rotatably fitted to an outer circumferential surface 11 of the inner ring 10 positioned between the washer 15 and the flange portion 13, with an intervening resin liner 30. The resin liner 30 is formed on the outer circumferential surface 11 of the inner ring 10 and on an inner end face 131 of the flange portion 13. Further, the resin liner 30 is also formed on an inner end face 151 of the washer 15.

On outer circumferential portions at the both ends of the outer ring 20 in the axial direction, annular projections 23 are formed projecting outwardly in the axial direction. The outer ring 20 is rotatably fitted on the outer circumferential surface 11 of the inner ring 10 via the resin liner 30. When the outer ring 20 rotates, an inner circumferential surface 22 of the outer ring 20 slides on an outer circumferential surface 31 of the resin liner 30. The inside of the track roller bearing 1, that is, the interspace defined between the inner ring 10 and the outer ring 20, is sealed up by a pair of seal rings 40 fitted in the both ends of the outer ring 20 in the axial direction. One seal ring 40 of the pair of seal rings 40 is fitted between the annular projection 23 of the outer ring 20 and the flange portion 13 of the inner ring 10 in an elastically deformed state, while the other seal ring 40 of the pair of seal rings 40 is fitted between the annular projection 23 of the outer ring 20 and the washer 15 in a elastically deformed state. On the inner circumferential surfaces of the annular projections 23 of the outer ring 20, circumferential grooves 232 are formed to retain the seal rings 40 in a removable manner.

The track roller bearing 1 configured as above is assembled according to such a procedure as to insert the inner ring 10 through a through hole 29 of the outer ring 20 retaining the seal rings 40 in the circumferential grooves 232, and then fit and fix the washer 15 into the small diameter portion 14 of the inner ring 10.

### [2] The liner

The resin liner 30 described above is formed by covering the outer circumferential surface 11 of the inner ring 10 with a self-lubricating resin containing polytetrafluoroethylene (PTFE) as a solid lubricant. Examples of the resin which can serve as the primary constituent of the resin liner 30 described above is acrylic resin, epoxy resin, polyether ether ketone (PEEK), or the like. However, the resin is not limited to these materials. It is desirable for the resin liner 30 to be as thick as about 0.2 to 0.3 mm.

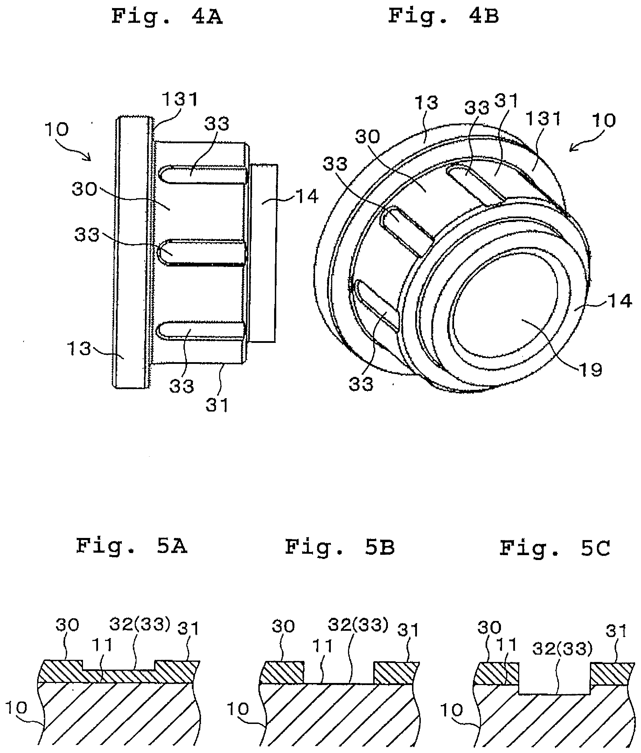

The present invention is characterized by a non-contact portion formed on the outer circumferential surface 31 (liner sliding surface) of the resin liner 30, the non-contact portion being a portion at which the resin liner 30 does not contact the inner circumferential surface 22 (opposite surface) of the outer ring 20. Specific examples of the non-contact portion can be grooves 32 extending in the circumferential direction as depicted in Figs. 3A and 3B or grooves 33 extending in the axial direction as depicted in Figs. 4A and 4B. Note that, in Figs. 1A and 1B and in Fig. 2, single groove 32 extending in the circumferential direction is formed in the resin liner 30.

Three grooves 32 are depicted in Figs. 3A and 3B. One of the three grooves 32 is formed at the central part of the resin liner 30 in the axial direction, and one of the two remaining grooves 32 is formed at each end of the resin liner 30 in the axial direction. The grooves 32 formed at the both ends of the resin liner 30 in the axial direction are narrower than the groove 32 formed at the central part of the resin liner 30 in the axial direction. Note that, although the narrow groove 32 formed at the side of the small diameter portion 14 is depicted in Figs. 3A and 3B as a portion opened to the end face, this portion becomes a groove having walls on both sides in the axial direction when the washer 15 is fitted into the small diameter portion 14. Therefore, this portion is referred to as the groove 32; although it is not a groove formed in the area in which the resin liner is formed. The example of Fig. 3A and 3B includes one groove 32 formed in the area in which the resin liner is formed. According to the present invention, the number of grooves 32 extending in the circumferential direction is not limited to one. If a plurality of grooves 32 are formed, then it is preferable to arrange the grooves 32 at equal intervals in the axial direction for dispersing the load equally. The plurality of grooves 33 which are depicted in Figs 4A and 4B and
which extend in the axial direction are formed at equal intervals in the circumferential direction. These grooves 33 are opened to the end face on the side of the small diameter portion 14 . If the groove 33 is adopted, it is preferable to form at least two of such grooves 33 and, from the point of view of dispersing the load equally, it is preferable to arrange the grooves 33 at equal intervals in the circumferential direction. Further, the grooves 32 and 33 mentioned above may coexist on the outer circumferential surface 31 of the resin liner 30.

It is possible to form the grooves 32 and 33 by removing the resin liner 30 by means of a cutting operation or the like after forming the resin liner 30 on the entire surface of the outer circumferential surface 11 of the inner ring 10. In such cases, depths of the grooves 32, 33 may be set to be smaller than thickness of the resin liner 30, such that the outer circumferential surface 11 of the inner ring 10 is covered by the resin liner 30 even in the non-contact portion (see Fig. 5A). Alternatively, the resin liner 30 may be entirely removed from a portion in which the groove is formed, such that the outer circumferential surface 11 of the inner ring 10 is not covered by the resin liner 30 in the non-contact portion. In the latter case, it may be possible to adopt two configurations described below. In one configuration, bottom surfaces of the grooves 32, 33 are continuous (flush) with the interface between the resin liner 30 and the outer circumferential surface 11 (See, Fig. 5B) . In the other configuration, depth of the grooves are set to be larger than the thickness of the resin layer 30 by cutting the surface of the outer circumferential surface 11, that is, in this configuration bottom surfaces of the grooves 32, 33 are farther from the outer circumferential surface 31 than the interface between the resin liner 30 and the outer circumferential surface 11 (see Fig. 5C) . In other words, the distances between the bottom surfaces of the grooves 32, 33 and the outer circumferential surface 31 are larger than the distance between the circumferential surface 31 and the interface of the resin liner 30 and the outer circumferential surface 11. Considering that it is possible to appropriately select the depth of the grooves 32 and 33 as described above, the depth of the grooves 32 and 33 need not be specified with high precision when making the non-contact portion by cutting process or the like. Therefore, it becomes easier to manufacture the grooves 32 and 33 and, consequently, it becomes easier to manufacture the track roller bearing 1.

### [3] Function and effect of the above embodiment

The track roller bearing 1 is mounted to the movable member supported to be movable to extend and retract as described previously in a manner that the axial direction of the track roller bearing 1 is orthogonal to the movement direction of the movable member. The track roller bearing 1 is used in a state that the outer circumferential surface 21 of the outer ring 20 is in contact with the track having a guide rail shape. The outer ring 20 of the track roller bearing 1 rotates to follow the extension or retraction movement of the movable member, thereby guiding the movement of the movable member. As the outer ring 20 rotates, the inner circumferential surface 22 of the outer ring 20 slides on the outer circumferential surface 31 of the resin liner 30. Thus, by virtue of the effect of the self-lubricating resin liner 30, the outer ring 20 rotates smoothly.

In the track roller bearing 1 mentioned above, the grooves 32 (33) are formed as the non-contact portions in the outer circumferential surface 31, that is the liner sliding surface, of the resin liner 30, the non-contact portions being portions in each of which the outer circumferential surface 31 of the resin liner 30 does not contact the inner circumferential surface 22 of the outer ring 20. By forming the non-contact portions in this manner, the resin liner 30 has a smaller sliding area against the outer ring 20 than in the case of not forming the non-contact portions . On the other hand, if the inner circumferential surface 22 of the outer ring 20 slides on the outer circumferential surface 31 of the resin liner 30, then the outer circumferential surface 31 of the resin liner 30 is abraded away to produce abrasion powder. The rotating outer ring 20 brings the abrasion powder into the grooves 32 (33) to restrain the abrasion powder from adhering to the sliding surface of the outer ring 20 or the resin liner 30. Therefore, when the track roller bearing 1 is subject to the load, increase of a rotary torque needed to rotate the outer ring 20 is suppressed. Further, because there is an increase in the contact surface pressure of the resin liner 30, the friction coefficient decreases and the rotational resistance of the outer ring 20 is reduced. From these factors, it is possible for the outer ring 20 to rotate smoothly for a long period even being under high load. As a result, the occurrence of a problem like the outer ring 20 slipping instead of rotating is suppressed.

### [4] Other embodiments

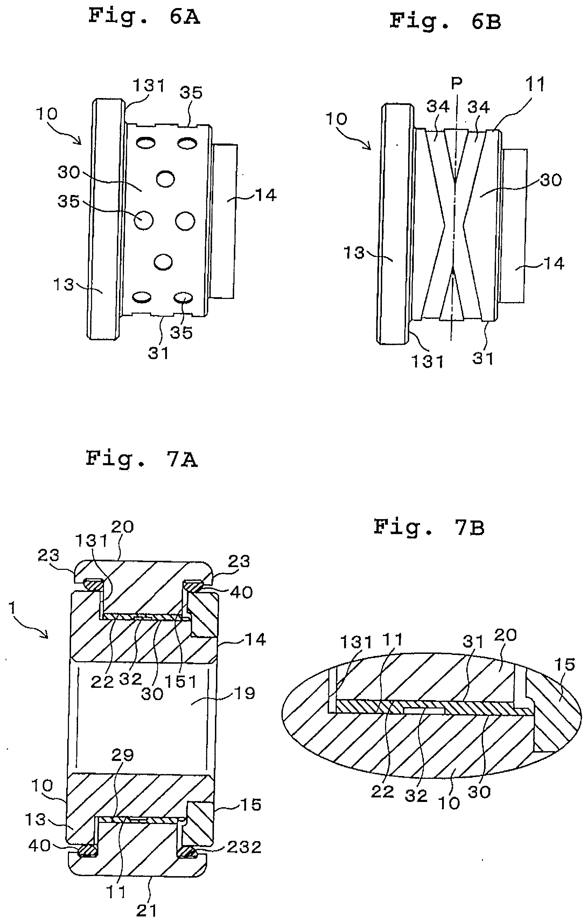

In the above embodiment, as representative examples of the non-contact portions of the present invention, the grooves 32 extending in the circumferential direction and the grooves 33 extending in the axial direction, both provided in the outer circumferential surface 31 of the resin liner 30, were explained. However, the non-contact portions of the present invention are not limited to these configurations. Another example of the non-contact portion may be a plurality of recesses 35, such as depicted in Fig. 6A, which are formed dispersedly in the outer circumferential surface 31 of the resin liner 30. The planar shape of the recess 35 may be a circular or elliptic, for example. Without being limited to this, however, it is possible to adopt any shape. Further, the recess 35 described above may coexist with one of or both of grooves 32 and 33.

Further, it is possible to adopt grooves 34 shown in Fig. 6B as-the non-contact portion, which extends in oblique directions in relation to the axial direction. According to the embodiment depicted in Fig. 6B, two grooves 34 are formed symmetrically with respect to a plane P orthogonal to the axial direction of the inner ring 10. Each of the two grooves 34 is circumferential groove which is inclined from the axial direction and closed within the outer circumferential surface 11 of the inner ring 10. However, the grooves 34 may be spiral grooves reaching the both ends, in the axial direction, of the outer circumferential surface 11. Further, the number of grooves 34 is not limited to two.

The following is the reason for forming the grooves 34 symmetrically with respect to the plane P orthogonal to the axial direction of the inner ring 10. That is, if only one groove 34 extending in an oblique direction is provided, for example, then due to this single groove 34, a component force in the axial direction may be generated when the outer ring 20 rotates. If the component force is generated, then the outer ring 20 is pressed in the axial direction of the inner ring 10 or the washer 15 as the outer ring 20 rotates . However, when two grooves 34 are formed symmetrically, the component forces generated by the respective grooves cancel each other, and thus the action of the axial force on the outer ring 20 is suppressed. If the outer ring 20 shifts in the axial direction, the outer ring 20 or the washer 15 is pressed against the inner ring 10, and problems such as increase of the rotational torque are caused. Therefore, for preventing such kinds of problems, it is effective to form the grooves 34 symmetrically. Further, forming the non-contact portions symmetrically is effective not only in the case where the non-contact portions are grooves like grooves 34, but also, for example, in the case where the non-contact portions are the plurality of recesses 35 depicted in Fig. 6A.

Further, in all of the above embodiments, the resin liner 30 is formed on the outer circumferential surface 11 of the inner ring 10. However, the resin liner 30 according to the present invention may be formed on at least one of the outer circumferential surface 11 of the inner ring 10 and the inner circumferential surface 22 of the outer ring 20. Hence, as depicted in Figs. 7A and 7B, the resin liner 30 may be formed on the inner circumferential surface 22 of the outer ring 20, and the non-contact portion, such as the groove 32 and the like, in which the resin liner 30 does not contact the outer circumferential surface 11 of the inner ring 10, may be formed in the resin liner 30 provided on the outer ring 20 side.

### <Working examples>

### [1] Endurance test

Using each of the inner rings depicted in Figs. 3A and 3B and Figs. 4A and 4B in the track roller bearing having the structure depicted in Fig. 1, a track roller bearing of working example 1 and a track roller bearing of working example 2 were obtained. Further, a track roller bearing having the same configuration as the track roller bearing depicted in Fig. 1, except that the outer circumferential surface of the resin liner does not have non-contact portion, was made and used as comparative example 1. For the track roller bearings of the working examples 1 and 2 and comparative example 1, an endurance test was carried out in which the outer ring was reciprocatingly rotated while a load in the radial direction of the outer ring was applied on the outer ring, and confirmation was made as to how many time can each of outer rings rotates before it slips.

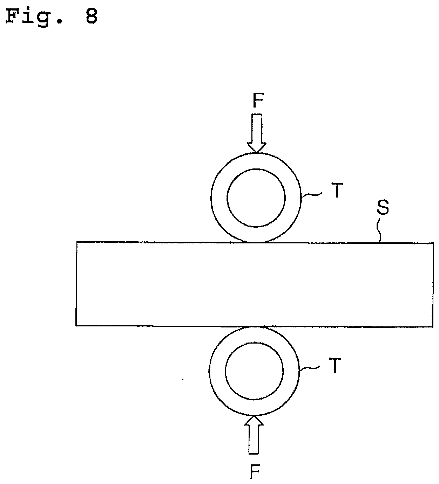

The endurance test is designed to continuously and reciprocatingly rotate the outer rings of track roller bearings T by interposing a track plate S between the track roller bearings T as depicted in Fig. 8, and reciprocatingly moving the track plate S in the left-right directions in the Fig.8 while pressing the track roller bearings T against the track plate S with a load F in the radial direction. The endurance experiment was carried out by reciprocatingly rotating the outer rings 300,000 times while applying the radial load of 8.6 kN on the track roller bearings T, and it was investigated whether or not the outer rings slipped on the track plate S. The result is shown in the table 1.

**<Table 1>**

| | |
|---|---|
| Comparative example 1 | Slip occurred after 215,000 rotations |
| Working example 1 | No slip occurred after 300,000 rotations |
| Working example 2 | No slip occurred after 300,000 rotations |

According to the table 1, in the track roller bearings of the comparative example 1, the outer rings slipped after 215,000 rotations. In contrast, in the track roller bearings of the working examples 1 and 2 of the present invention, the outer rings did not slip even after 300,000 rotations and kept themselves in a rotatable state. Thus, it was verified that the slips are prevented from occurring for a long period of time by forming the non-contact portions in the outer circumferential surface of the resin liner.

### <Industrial Applicability>

It is suitable to apply the track roller bearing according to the present invention to slats and/or flaps provided in an airplane wing.

### <Citation list>

1 track roller bearing, 10 inner ring, 11 outer circumferential surface of the inner ring, 20 outer ring, 22 inner circumferential surface of the outer ring (opposite surface), 30 resin liner, 31 outer circumferential surface of the resin liner (liner sliding surface), 32,33,34 groove (non-contact portion), 35 recess (non-contact portion), P plane orthogonal to the axial direction.

## Claims

1. A track roller bearing (1) comprising:
an inner ring (10);
an outer ring (20) which is concentric and rotatable relative to the inner ring;
a resin liner (30) formed on at least one of an outer circumferential surface (11) of the inner ring and an inner circumferential surface (22) of the outer ring; and
an opposite surface (11, 22) slidable on a liner sliding surface (31) of the resin liner,
wherein a non-contact portion (32, 33, 34, 35) is formed in an area in which the resin liner is formed, the non-contact portion being a portion in which the liner sliding surface does not contact the opposite surface, **characterized in that**
the non-contact portion is at least one of a plurality of grooves (32) which extend in a circumferential direction of the inner and outer rings, a plurality of grooves (33) which extend in an axial direction of the inner and outer rings, and a plurality of recesses (35) formed dispersedly; or the non-contact portion is a plurality of grooves (34) which extend in oblique directions in relation to the axial direction of the inner and outer rings.

2. The track roller bearing according to claim 1, **characterized in that** a surface (11, 22) on which the resin liner (30) is formed, is covered with the resin liner (30) in the non-contact portion, the surface being the outer circumferential surface of the inner ring (10) and/or the inner circumferential surface of the outer ring (20).

3. The track roller bearing according to claim 1, **characterized in that** a surface (11, 22) on which the resin liner (30) is formed, is not covered with the resin liner (30) in the non-contact portion, the surface being the outer circumferential surface of the inner ring (10) and/or the inner circumferential surface of the outer ring (20), and a surface which defines a bottom of the non-contact portion includes a plane in continuity with an interface between the resin liner (30) and the surface on which the resin liner (30) is formed, or a plane farther from the surface of the resin liner than the interface.

4. The track roller bearing according to any one of claims 1 to 3, **characterized in that** the non-contact portion is provided symmetrically with respect to a plane orthogonal to an axial direction of the inner ring and the outer ring.

5. The track roller bearing according to any one of claims 1 to 4, **characterized in that** the non-contact portion is the plurality of grooves (32) which extend in the circumferential direction and which are arranged at equal intervals in the axial direction and/or the plurality of grooves (33) which extend in the axial direction and which are arranged at equal intervals in the circumferential direction.

6. The track roller bearing according to any one of claims 1 to 5, **characterized in that** the resin liner (30) is formed on the outer circumferential surface of the inner ring (10) and the opposite surface is defined on the inner circumferential surface of the outer ring (20).

7. The track roller bearing according to any one of claims 1 to 5, **characterized in that** the resin liner (30) is formed on the inner circumferential surface of the outer ring (20) and the opposite surface is defined on the outer circumferential surface of the inner ring (10).

## Patentansprüche

1. Laufrollenlager (1), umfassend:
einen Innenring (10);
einen Außenring (20), der konzentrisch ist und gegenüber dem Innenring drehbar ist;
eine Harzauskleidung (30), die auf mindestens einer äußeren Umfangsfläche (11) des Innenrings oder einer inneren Umfangsfläche (22) des Außenrings gebildet ist; und
eine Gegenfläche (11, 22), die auf einer Auskleidungs-Gleitfläche (31) der Harzauskleidung verschiebbar ist,
wobei ein berührungsloser Teil (32, 33, 34, 35) in einem Bereich gebildet ist, in dem die Harzauskleidung gebildet ist, wobei der berührungslose Teil ein Teil ist, in dem die Auskleidungs-Gleitfläche die Gegenfläche nicht berührt, **dadurch gekennzeichnet, dass** der berührungslose Teil mindestens eine aus einer Vielzahl von Nuten (32) ist, die sich in einer Axialrichtung des Innen- und des Außenrings erstrecken, einer Vielzahl von Nuten (33), die sich in einer axialen Richtung des Innen- und des Außenrings erstrecken, und einer Vielzahl von Vertiefungen (35), die verstreut gebildet sind; oder dass der berührungslose Teil eine Vielzahl von Nuten (34) ist, die sich in Bezug auf die Axialrichtung des Innen- und des Außenrings in schrägen Richtungen erstrecken.

2. Laufrollenlager nach Anspruch 1, **dadurch gekennzeichnet, dass** eine Fläche (11, 22), auf der die Harzauskleidung (30) gebildet ist, im berührungslosen Teil mit der Harzauskleidung (30) bedeckt ist, wobei die Fläche die äußere Umfangsfläche des Innenrings (10) und/oder die innere Umfangsfläche des Außenrings (20) ist.

3. Laufrollenlager nach Anspruch 1, **dadurch gekennzeichnet, dass** eine Fläche (11, 22), auf der die Harzauskleidung (30) gebildet ist, im berührungslosen Teil nicht mit der Harzauskleidung (30) bedeckt ist, wobei die Fläche die äußerer Umfangsfläche des Innenrings (10) und/oder die innere Umfangsfläche des Außenrings (20) ist, und eine Fläche, die einen Boden des berührungslosen Teils bestimmt, eine Ebene enthält, die kontinuierlich ist mit einer Grenzfläche zwischen der Harzauskleidung (30) und der Fläche, auf der die Harzauskleidung (30) gebildet ist, oder eine Ebene, die von der Fläche der Harzauskleidung weiter weg ist als die Grenzfläche.

4. Laufrollenlager nach einem der Ansprüche 1 bis 3, **dadurch gekennzeichnet, dass** der berührungslose Teil symmetrisch in Bezug auf eine Ebene ist, die orthogonal zu einer axialen Richtung des Innenrings und des Außenrings vorgesehen ist.

5. Laufrollenlager nach einem der Ansprüche 1 bis 4, **dadurch gekennzeichnet, dass** der berührungslose Teil die Vielzahl von Nuten (32), die sich in der Umfangsrichtung erstrecken und die in der axialen Richtung in gleichen Abständen angeordnet sind, und/oder die Vielzahl von Nuten (33), die sich in der axialen Richtung erstrecken und die in der Umfangsrichtung in gleichen Abständen angeordnet sind, ist.

6. Laufrollenlager nach einem der Ansprüche 1 bis 5, **dadurch gekennzeichnet, dass** die Harzauskleidung (30) auf der äußeren Umfangsfläche des Innenrings (10) gebildet ist und die Gegenfläche auf der inneren Umfangsfläche des Außenrings (20) definiert ist.

7. Laufrollenlager nach einem der Ansprüche 1 bis 5, **dadurch gekennzeichnet, dass** die Harzauskleidung (30) auf der inneren Umfangsfläche des Außenrings (20) gebildet ist und die Gegenfläche auf der äußeren Umfangsfläche des Innenrings (10) definiert ist.

## Revendications

1. Palier à galet de roulement (1) comprenant :
une bague interne (10) ;
une bague externe (20) qui est concentrique et peut tourner par rapport à la bague interne ;
un revêtement en résine (30) formé sur au moins l'une parmi une surface circonférentielle externe (11) de la bague interne et une surface circonférentielle interne (22) de la bague externe ; et
une surface opposée (11, 22) pouvant coulisser sur une surface coulissante de revêtement (31) du revêtement en résine,
dans lequel une partie sans contact (32, 33, 34, 35) est formée dans une zone dans laquelle le revêtement en résine est formé, la partie sans contact étant une partie dans laquelle la surface coulissante de revêtement n'est pas en contact avec la surface opposée, **caractérisé en ce que** :
la partie sans contact est au moins l'une d'une pluralité de rainures (32) qui s'étendent dans une direction circonférentielle des bagues interne et externe, une pluralité de rainures (33) qui s'étendent dans une direction axiale des bagues interne et externe, et une pluralité d'évidements (35) formés de manière dispersée ; ou bien la partie sans contact est une pluralité de rainures (34) qui s'étendent dans des directions obliques par rapport à la direction axiale des bagues interne et externe.

2. Palier à galet de roulement selon la revendication 1, **caractérisé en ce qu'**une surface (11, 22) sur laquelle le revêtement en résine (30) est formé, est recouverte avec le revêtement en résine (30) dans la partie sans contact, la surface étant la surface circonférentielle externe de la bague interne (10) et/ou la surface circonférentielle interne de la bague externe (20).

3. Palier à galet de roulement selon la revendication 1, **caractérisé en ce qu'**une surface (11, 22) sur laquelle le revêtement en résine (30) est formé, n'est pas recouverte avec le revêtement en résine (30) dans la partie sans contact, la surface étant la surface circonférentielle externe de la bague interne (10) et/ou la surface circonférentielle interne de la bague externe (20), et une surface qui définit un fond de la partie sans contact comprend un plan en continuité avec une interface entre le revêtement en résine (30) et la surface sur laquelle le revêtement en résine (30) est formé, ou un plan plus éloigné de la surface du revêtement en résine que l'interface.

4. Palier à galet de roulement selon l'une quelconque des revendications 1 à 3, **caractérisé en ce que** la partie sans contact est prévue de manière symétrique par rapport à un plan orthogonal à une direction axiale de la bague interne et de la bague externe.

5. Palier à galet de roulement selon l'une quelconque des revendications 1 à 4, **caractérisé en ce que** la partie sans contact est la pluralité de rainures (32) qui s'étendent dans la direction circonférentielle et qui sont agencées à intervalles égaux dans la direction axiale et/ou la pluralité de rainures (33) qui s'étendent dans la direction axiale et qui sont agencées à intervalles égaux dans la direction circonférentielle.

6. Palier à galet de roulement selon l'une quelconque des revendications 1 à 5, **caractérisé en ce que** le revêtement en résine (30) est formé sur la surface circonférentielle externe de la bague interne (10) et la surface opposée est définie sur la surface circonférentielle interne de la bague externe (20).

7. Palier à galet de roulement selon l'une quelconque des revendications 1 à 5, **caractérisé en ce que** le revêtement en résine (30) est formé sur la surface circonférentielle interne de la bague externe (20) et la surface opposée est définie sur la surface circonférentielle externe de la bague interne (10).
